# EUROPEAN PATENT APPLICATION

(11) **EP 2 648 075 A1**
(43) Date of publication of application: **09.10.2013**
(21) Application number: 11851385.2
(22) Date of filing: 21.12.2011
(51) Int. Cl.: G06F 3/033, G06F 3/023, G06F 3/038, H01H 25/04, H01H 25/06

(54) **INPUT OPERATION DEVICE, INPUT OPERATION CONTROL METHOD, INPUT OPERATION CONTROL PROGRAM, AND METHOD OF DESIGNING INPUT OPERATION DEVICE**

(30) Priority: 24.12.2010 JP 2010287238
(71) Applicant: JVC Kenwood Corporation, Yokohama-shi, Kanagawa 221-0022 (JP)
(72) Inventor: WATANABE, Kazuo, Yokohama-shi Kanagawa 221-0022 (JP)
(74) Representative: Carstens, Dirk Wilhelm
(86) International application number: PCT/JP2011/079683
(87) International publication number: WO 2012/086707

(57) **Abstract**

There is provided an input operation apparatus that reduces user's unintended operation errors as much as possible to improve the operability. The input operation apparatus includes a control knob (400) that can perform a rotation operation, a tilt operation, and a depression operation. In a predetermined mode, the operation of the control knob (400) in a tilt direction is processed equivalently with the depression operation. Keys are allocated to the rotation operation as much as possible, and keys are allocated such that the tilt operation is processed as much as possible in the same manner as the depression operation.

## Description

### Field

The present invention relates to an input operation apparatus and an input operation control method. More particularly, the present invention relates to an input operation apparatus and an input operation control method in which, when a user presses a position shifted from a correct position more or less, the press is not considered to be an input error, and user's unintended operation errors are reduced as much as possible to improve the operability.

### Background

A vehicle onboard device is known as a car audio system device mounted on an automobile (Patent Literature 1, for example).
A radio tuner or a CD driver is incorporated in a vehicle onboard device, and a user can enjoy radio broadcasting or music. Moreover, the vehicle onboard device is provided with a USB terminal or Bluetooth (registered trademark), and can be connected with a portable digital music player such as iPod (registered trademark) using the USB terminal, or a cellular telephone through Bluetooth (registered trademark).

Incidentally, in such a multi-functional vehicle onboard device, components such as various operation keys and an LCD display device need to be mounted on an operation panel whose area is limited. Therefore, such a vehicle onboard device adopts an operating unit that can perform many types of input operation at positions to be pressed.

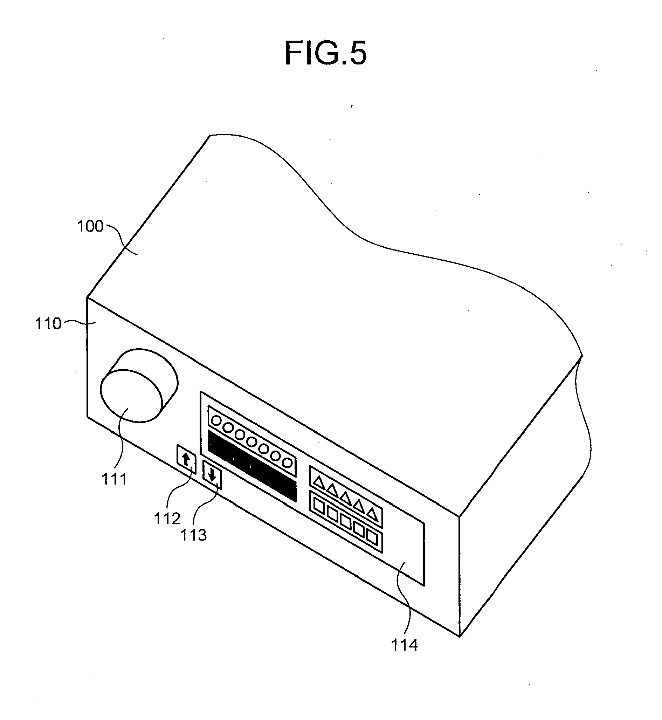

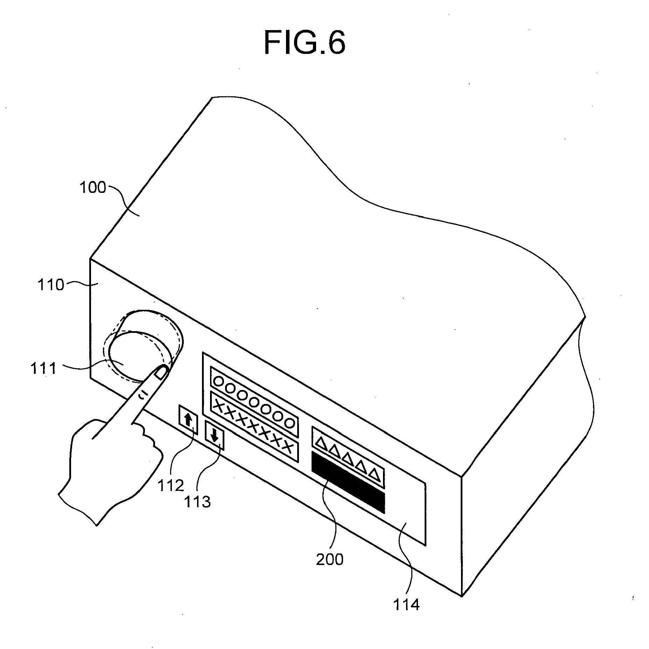

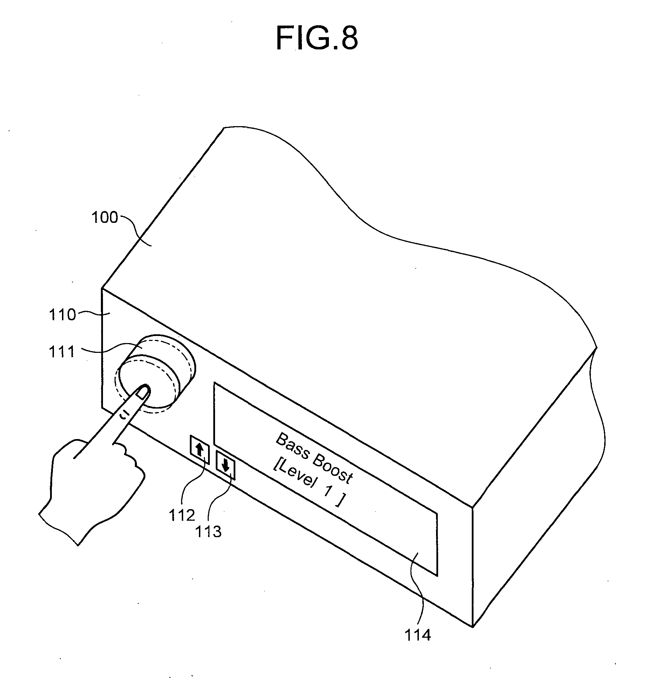

For example, as illustrated in FIG. 5, an operation key 111, operation buttons 112 and 113, and a display unit 114 are disposed on an operation panel 110 of a vehicle onboard device 100.
A tilt operation and a depression operation can be performed on the operation key 111. As for the tilting operation using the operation key 111, the right end and the left end can be independently pressed. For example, as illustrated in FIG. 6, when the right end is pressed, the operation key 111 is slightly tilted to the right side. By pressing the operation key 111 to the right, key allocations are set in such a way that a select cursor 200 moves to the right, the set level is changed to increase, a track is skipped, or a track is fast-forwarded.
Moreover, as for the depression operation using the operation key 111, as illustrated in FIG. 8, when the center of the operation key 111 is pressed, the operation key 111 is pressed down straight.
By pressing down the operation key 111, an input confirmation as Enter is allocated.

As the operation buttons, various operation keys are disposed as necessary.
For example, separate button keys (not illustrated) to select various menus for iPod (registered trademark), a telephone, a radio tuner, and the like may be provided.
Here, the operation buttons 112 and 113 are provided to instruct up movement and down movement, respectively.
By pressing the up button 112, key allocations are set in such a way that the cursor 200 is moved upward, the set level is changed to increase, or a menu is moved to a higher-order layer.
By pressing the down button 113, key allocations are set in such a way that the cursor 200 is moved downward, the set level is changed to reduce, or a menu is moved to a lower-order layer.

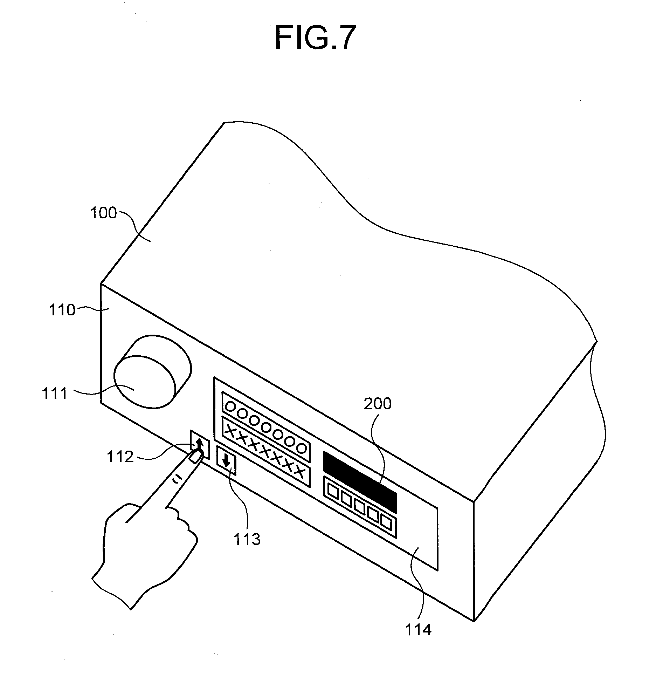

The operation of the vehicle onboard device 100 will be described with reference to the drawings.
In FIG. 6, four select items are displayed on the display unit 114.
When the operation key 111 is pressed to the right in this state, the cursor 200 is moved to the right. Furthermore, when the up button 112 is pressed as illustrated in FIG. 7, the cursor 200 is moved upward. When the operation key 111 is then pressed down as illustrated in FIG. 8, a selection is confirmed, and a lower-order setting screen appears.

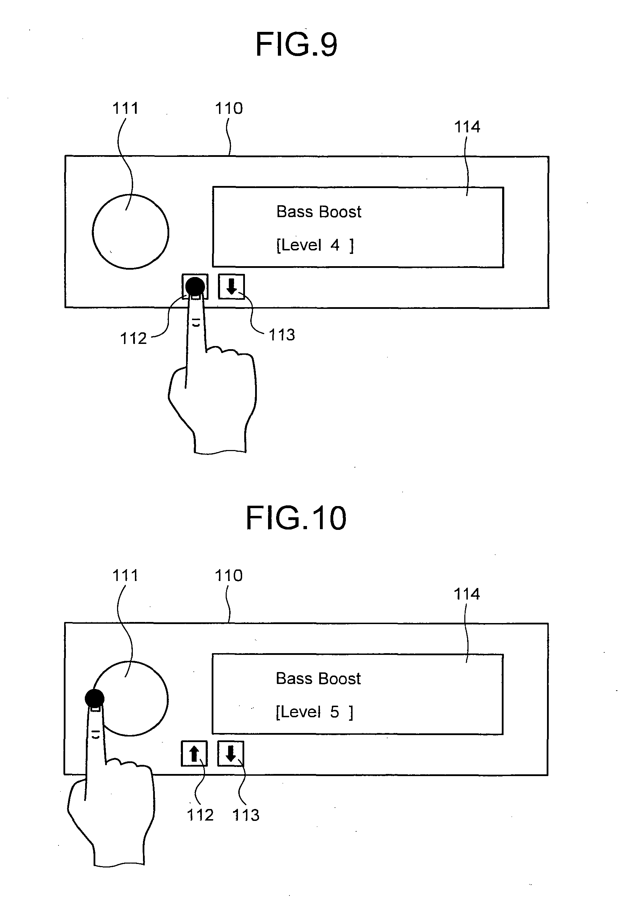

Here, bass output adjustment (Bass Boost) in audio settings is exemplified.
As illustrated in FIG. 9, when the up button 112 is pressed, the level of a bass booster rises.

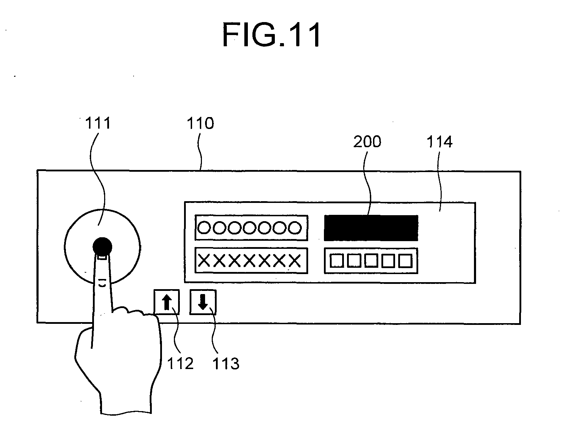

Moreover, as illustrated in FIG. 10, key allocations are set in such a way that the operation key 111 also can change the level, in which the operation key 111 is pressed to the right to raise the level and pressed to the left to lower the level.
The operation key 111 is pressed down when the bass booster is at a desired level (FIG. 11), and then input is confirmed. Here, after the input is confirmed, the menu is returned to the higher-order layer.

As described above, the user can perform various inputs for settings, using the operation key 111 and the operation buttons 112 and 113. Particularly, since the operation key 111 serves roles of pressing to the right and the left and an enter with a single member, the operation key 111 contributes to improving the space efficiency of the operation panel 110.

### Citation List

### Patent Literature

Patent Literature 1: Japanese Patent Application Laid-open No. 2010-159016

### Summary

### Technical Problem

However, the operation key 111 described above has a problem in that the user is prone to make operation errors. For example, such an event often occurs that the user intends to press down the center of the operation key 111 for an enter input in the state in FIG. 10 (FIG. 11), but the user presses a shifted place to make a right press or a left press. When this happens, the cursor 200 is shifted from the intended item, and the user needs to press the operation key 111 to the right or to the right to make a selection again.
Moreover, on the contrary, such an event possibly occurs that the user makes an enter input when the user desires to press the operation key 111 to the right or to the right. In this case, it is necessary for the user to return the layer and to make a selection again.

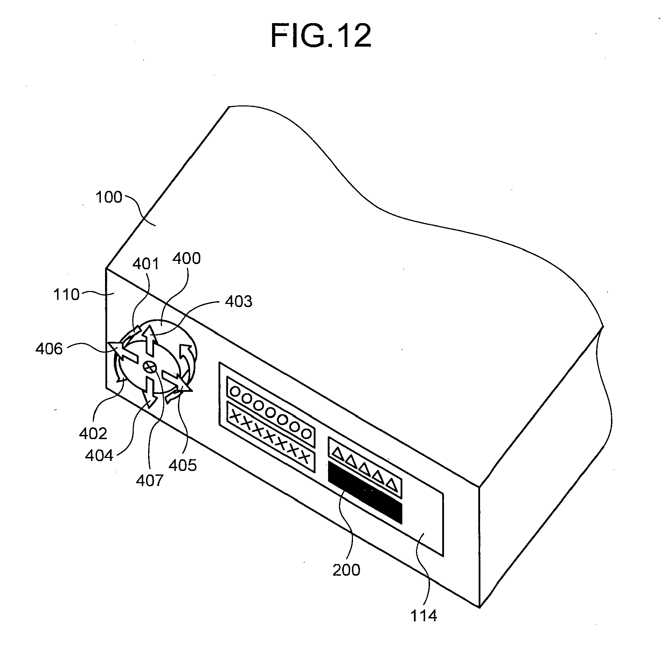

Furthermore, in recent years, a control knob 400 that is also rotatable is popularly used as illustrated in FIG. 12.
The control knob 400 can perform a right rotation 401 and a left rotation 402 for rotation operation, and can perform an up press 403, a down press 404, a right press 405, and a left press 406 for tilt operation. Moreover, the control knob 400 can perform a depression operation 407, and can perform seven types of input operations in total.
However, such a problem still remains in that the position to be pressed is slightly shifted to cause operation errors.

It is an object of the present invention to provide an input operation apparatus, an input operation control method, an input operation control program, and a designing method for an input operation apparatus in which user's unintended operation errors are reduced as much as possible to improve the operability.

### Solution to Problem

According to an aspect of the present invention an input operation apparatus includes: an operating unit capable of performing a tilt operation and a depression operation; a detecting unit that detects a tilt direction and depression of the operating unit; and a control unit that manages a plurality of modes, each mode including a plurality of select items, and controls input change or input confirmation according to an input operation made by the operating unit, and the control unit processes an operation of the operation unit in a tilt direction equivalently with the depression operation in a predetermined mode.

According to another aspect of the present invention the operating unit is further capable of performing a rotation operation, the detecting unit further detects rotation of the operating unit, and when the rotation operation of the operating unit is allocated to change of the select item in a predetermined mode, the control unit processes an operation of the operating unit in a tilt direction equivalently with the depression operation.

According to still another aspect of the present invention, the operating unit is further capable of performing a rotation operation, the detecting unit further detects rotation of the operating unit, and when the rotation operation of the operating unit is allocated to raising and lowering of a set level in a predetermined mode, the control unit processes an operation of the operating unit in a tilt direction equivalently with the depression operation.

According to still another aspect of the present invention, the control unit allocates the rotation operation of the operating unit to an input operation that is performed by the rotation operation or by the tilt operation, and processes the operation of the operating unit in the tilt direction equivalently with the depression operation.

According to still another aspect of the present invention, the input operation that is performed by the rotation operation or by the tilt operation is at least any one of changing a select item and raising and lowering a set level.

According to still another aspect of the present invention, an input operation control method for controlling an input operation using an input operation apparatus including an operating unit capable of operating a tilt operation and a depression operation, the method includes: processing an operation of the operating unit in a tilt direction equivalently with a depression operation in a predetermined mode.

According to still another aspect of the present invention, the operating unit is further capable of performing a rotation operation, and the rotation operation of the operating unit is processed as changing a select item, and an operation of the operating unit in a tilt direction is processed equivalently with the depression operation in a predetermined mode.

According to still another aspect of the present invention, the operating unit is further capable of performing a rotation operation, and the rotation operation of the operating unit is processed as raising and lowering a set level, and an operation of the operating unit in a tilt direction is processed equivalently with the depression operation in a predetermined mode.

According to still another aspect of the present invention, an input operation control program that causes a computer, which is incorporated in an input operation apparatus including an operating unit capable of performing a tilt operation and a depression operation and a detecting unit that detects a tilt direction and depression of the operating unit, to function as a control unit configured to: manage a plurality of modes, each mode including a plurality of select items; control input change or input confirmation according to an input operation made by the operating unit; and process an operation of the operating unit in the tilt direction equivalently with the depression operation in a predetermined mode.

According to still another aspect of the present invention, a designing method for an input operation apparatus, the apparatus including: an operating unit capable of performing a tilt operation, a depression operation, and a rotation operation; a detecting unit that detects a tilt direction, depression and rotation of the operating unit; and a control unit that manages a plurality of modes, each mode including a plurality of select items, and controls input change or input conformation according to an input operation made by the operating unit, the method includes: allocating a rotation operation of the operating unit to the input operation that is performed by the rotation operation or by the tilt operation; and designing for allocation of the operations so as to process an operation of the operating unit in the tilt direction equivalently with the depression operation.

### Advantageous Effects of Invention

According to the present invention, the operation of the operating unit in the tilt direction is processed equivalently with the depression operation in the predetermined mode, so that processing is performed as a user's intention, even though the user wrongly tilts the operating unit while the user intends to press down the operating unit.
Accordingly, it is possible to reduce operation errors caused by a shift of a pressed position, and it is possible to significantly improve the operability.

### Brief Description of Drawings

FIG. 1 is a functional block diagram of a first embodiment.
FIG. 2 is a flowchart when designing key allocations.
FIG. 3 is a diagram of exemplary setting adjustment screens for sound effects.
FIG. 4 is a diagram of exemplary screens to select an audio preset.
FIG. 5 is a diagram of the appearance of a vehicle onboard device.
FIG. 6 is a diagram of a state a user is operating the vehicle onboard device.
FIG. 7 is a diagram of a state a user is operating the vehicle onboard device.
FIG. 8 is a diagram of a state a user is operating the vehicle onboard device.
FIG. 9 is a diagram of a state a user is operating the vehicle onboard device.
FIG. 10 is a diagram of a state a user is operating the vehicle onboard device.
FIG. 11 is a diagram of a state a user is operating the vehicle onboard device.
FIG. 12 is a diagram of a state a user is operating the vehicle onboard device.

### Description of Embodiments

An embodiment of the present invention will be described with reference to the drawings and reference signs designated to components in the drawing.

### First Embodiment

A first embodiment of the present invention will be described.
The first embodiment will be described as a vehicle onboard device 100 including a rotatable control knob 400 is taken as an example.
The appearance diagram of the first embodiment is the same as the one illustrated in FIG. 12, and the control knob 400 and a display unit 114 are disposed on an operation panel 110. Namely, the control knob 400 can be rotated to the right and the left for rotation operation, can be pressed upward and downward and pressed to the right and the left for tilt operation, and can be pressed down, which can perform seven types (seven commands) of input operation in total.

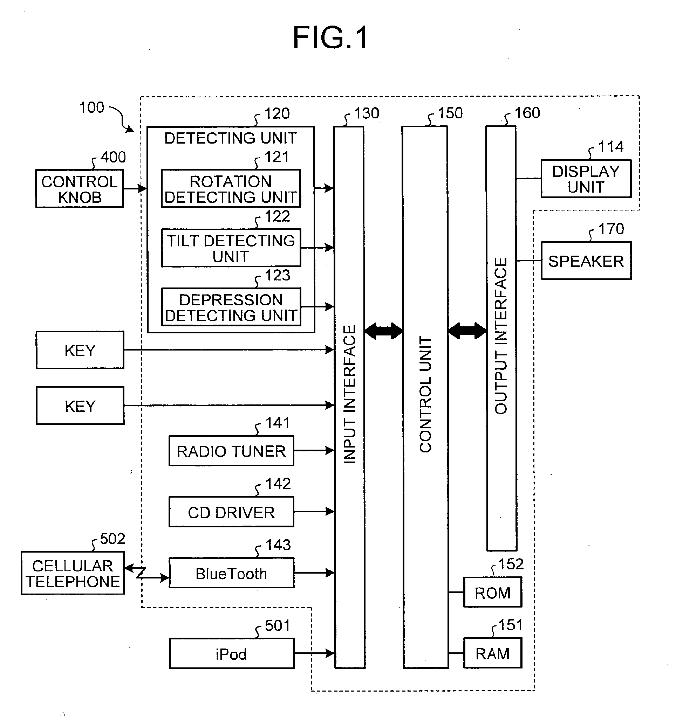

FIG. 1 is a functional block diagram of the first embodiment.
In FIG. 1, the operation of the control knob 400 is detected at a detecting unit 120, and the operation is inputted to a control unit 150 via an input interface 130.
The detecting unit 120 includes a rotation detecting unit 121 that detects rotating the control knob 400, a tilt detecting unit 122 that detects tilting the control knob 400 in four directions (in up, down, right, and left directions), and a depression detecting unit 123 that detects depression of the control knob 400.
These detecting units 121, 122, and 123 can be realized by using various encoders and switches.

Moreover, a radio tuner 141, a CD driver 142, and a Bluetooth (registered trademark) device (a wireless communicating unit) 143 are incorporated in the vehicle onboard device 100. In addition to these devices, an iPod (registered trademark) 501 can be connected to the control unit 150 via the input interface 130. Communications with a cellular telephone 502 can be established with Bluetooth (registered trademark) device 143, for example.

A RAM 151 and a ROM 152 that store various settings are additionally provided on the control unit 150, and the control unit 150 controls the overall operation of the vehicle onboard device. Various programs set on the RAM 151 and the ROM 152 are read into the control unit 150, so that the screen status of the display unit 114 and the operation for the operation of the control knob 400, for example, are controlled. The detail will be described later.
Furthermore, the display unit 114 and a speaker 170 are connected to the control unit 150 via an output interface 160.

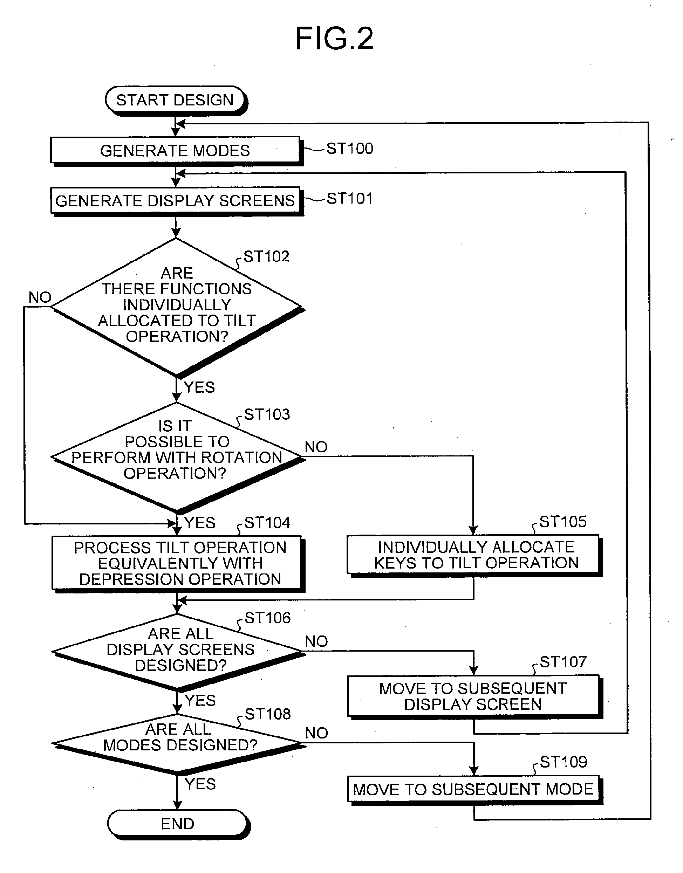

Since the present embodiment has features on key allocations to the operation of the control knob 400, the design of key allocations will be described with reference to a flowchart in FIG. 2.
Here, since the embodiment takes the vehicle onboard device 100 as an example for description, the designer of the vehicle onboard device 100 can design key allocations mainly on screen statuses in which functions depending on the vehicle onboard device itself are selected by a user. In the case where the vehicle onboard device 100 is connected to various sources (a portable music player and a cellular telephone) for operation, the key allocations of the control knob 400 basically take over the designs of sources.

For example, in the case of the iPod (registered trademark) 501 as well known, in selecting menus, rotation operation move listed items upward and downward, an up press moves a folder to a higher-order folder, and a center button confirms a selection or moves a layer to a lower-order layer. Moreover, in reproducing music, operation is determined, for example, in which rotation operation adjust a volume, a down press reproduces or pauses music, a left press and a right press skip music (a long press fast-forwards and fast-rewinds music), and the center button displays a time bar.
In such key allocations, the user easily operates the vehicle onboard device 100 with fewer operation errors when allocations are set similar to the allocations of sources, so that the key allocations of sources are not changed by the designer of the vehicle onboard device 100 in principle except for special exceptions.

On the other hand, for functions depending on the vehicle onboard device itself, there are audio adjustment and function settings (a current time setting, a repeat setting for CD tunes, hands-on/hands-free for a cellular telephone, device registration or deletion of an externally connected device, and so on). These do not depend on sources, and are settings and adjustments only for the vehicle onboard device 100. Therefore, the designer designs key allocations in such a way that the user easily operates the device and is not to prone to make operation errors as much as possible in the audio adjustment mode and the function setting mode.

FIG. 2 is a flowchart when designing key allocations.
First, in ST100, modes are created. Namely, modes necessary for the operation settings of the vehicle onboard device 100 are created including the audio adjustment mode and the function setting mode.
Subsequently, display screens to be displayed on the display unit 114 in the modes are generated (ST101).
For example, in the case of the audio adjustment mode, a setting adjustment screen for sound effects is generated as illustrated in a screen 30.

Here, in the operation of the generated display screen, it is determined whether there are functions individually allocated to tilt operation (ST102).
For example, in the case of the screen 30, three select items are disposed on the display unit 114 in the vertical direction. Therefore, such functions can be allocated that the cursor 200 is moved upward and downward for an up press and a down press (ST102: YES).

Subsequently, in this case, it is determined whether the same thing as on tilt operation is also applicable to rotation operation (ST103).
For example, in the screen status in which it is desired to move the cursor 200 upward and downward as illustrated in the screen 30, the same thing can be performed on rotating the control knob 400 (ST103: YES).
Namely, in the case where the control knob 400 is rotated to the right (rotated clockwise), the cursor 200 can be moved downward, and in the case where the control knob 400 is rotated to the left (rotated counterclockwise), the cursor 200 can be moved upward.
As described above, in the case where functions allocated to tilt operation can also be implemented in rotation operation (ST103: YES), keys are allocated to rotation operation, and a key equivalent to a depression operation is allocated to tilt operation (ST104).
In the screen status in the screen 30, moving the cursor 200 is allocated only to rotation operation, and an enter key the same as a depression operation is allocated to tilt operation.

Moreover, for example, in a screen 32, Level would be raised or lowered on the display unit 114.
In this case, although raising and lowering the level may be allocated to an up press and a down press (ST102: YES), raising and lowering the level may also be allocated to rotation operation (ST103: YES). Namely, in the case where the control knob 400 is rotated to the right (rotated clockwise), the level can be raised, and in the case where the control knob 400 is rotated to the left (rotated counterclockwise), the level can be lowered. Therefore, in the screen status in the screen 32, raising and lowering the level are allocated only to rotation operation, and an enter key the same as a depression operation is allocated to tilt operation.

Moreover, for example, as illustrated in a screen 41, although moving the cursor 200 to the right and the left can be allocated to a right press and a left press in the case where a selection is made from two select items arranged side by side (ST102: YES), moving the cursor 200 to the right and the left can also be performed by rotation operation (ST103: YES). Namely, in the case where the control knob 400 is rotated to the right (rotated clockwise), the cursor 200 may be moved to the right, and in the case where the control knob 400 is rotated to the left (rotated counterclockwise), the cursor 200 may be moved to the left. Therefore, in the screen status in the screen 41, moving the cursor 200 is allocated only to rotation operation, and an enter key the same as a depression operation is allocated to tilt operation.

It is noted that as illustrated in FIG. 6, also in the case where four select items are displayed on the display unit 114, when the cursor 200 is circulated and moved by rotation operation, it is unnecessary to allocate tilt operation to moving the cursor. Also in this case, an enter key the same as a depression operation can be allocated to tilt operation.

As described above, when tilt operation is set to an enter key the same as a depression operation, an enter (selection confirmation) is made as the user intends to do so, and operation errors caused by a shift of a pressed position can be eliminated, even though the user intends to make an enter but makes a right press or an up press.

Such key allocations are designed, and key allocations are sequentially performed on all the display screens of all the modes (ST106 to ST109).

It is noted that in ST102, if there are originally no functions individually allocated to tilt operation (ST102: NO), also in this case, a key equivalent to a depression operation is allocated to tilt operation (ST104).
Heretofore, when there are no functions individually allocated to tilt operation, no keys are allocated, and tilt operation is processed as no effect.
In this case, in the case where the user intends to make an enter but makes a right press or an up press, input cannot be confirmed as the user intends to do so, and the user has to again make a press.
In contrast, as in the present embodiment, when a key equivalent to a depression operation is allocated to tilt operation, an enter is made (a selection is confirmed) as the user intends to do so, even though a pressed position is shifted.

Moreover, in ST103, in the case where any alternatives cannot be made by rotation operation (ST103: NO), naturally, keys are individually allocated to tilt operation (ST105).
It is noted that when keys are individually allocated to tilt operation in ST105, keys may not always allocated to all of four directions.
For example, there may be a case where there are functions to be allocated to a right press, a left press, and a down press but there is no function to be allocated to an up press.
In this case, when there is no function to be allocated, no key is allocated to an up press operation, and the operation is processed as no effect.

As described above, key allocations are designed on the modes and the screen statuses of the vehicle onboard device.

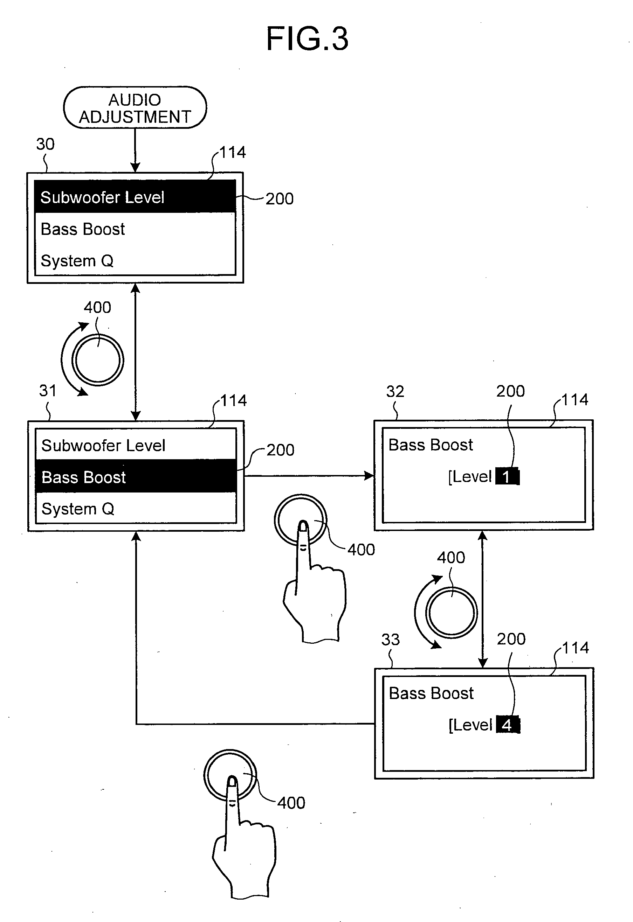

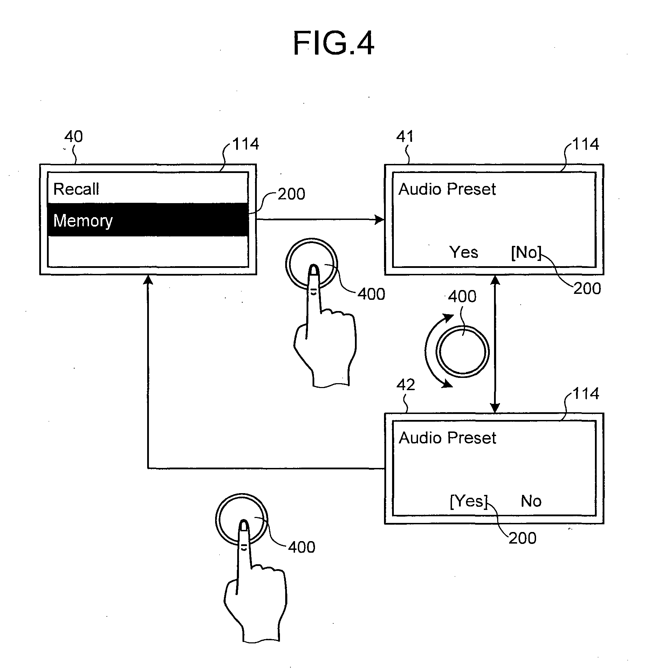

Next, the operation in the case where key allocations are designed as described above will be described with reference to FIGS. 3 and 4.
FIG. 3 is a diagram of illustrating the screen status of the audio adjustment mode.
On the screen 30, three select items are displayed in three rows on the display unit 114 in the vertical direction.
The user rotates the control knob 400 to move the cursor 200. For example, in the case where Bass Boost on the second row is to be selected as on a screen 31, the control knob 400 is rotated to the left.
When the user presses down the control knob 400 as the cursor 200 potions Bass Boost, the screen is moved to the lower-order layer of Bass Boost as on the screen 32, and a Bass Boost level select screen appears.
At this time, even though the user's finger presses a shifted position to make an up press or a right press, the press is similarly processed as a depression operation, and the screen is turned to the Bass Boost level select screen (the screen 32) as the user intends to do so.

The control knob 400 is then rotated to raise or lower the level. For example, as illustrated on a screen 33, when the user presses down the control knob 400 at a desired level, the level is confirmed, and the screen is returned to the higher-order layer as the screen 31.
Also on the screen 31, even though the user's finger presses a shifted position, the press is similarly processed as a depression operation, so that no operation errors occur.

Similarly, FIG. 4 is screens to select an audio preset.
On a screen 40, two elect items are displayed in two rows on the display unit 114 in the vertical direction.
The user rotates the control knob 400 to select memory on the second row. When the user presses down the control knob 400 as the cursor 200 points memory, the screen is moved to the lower-order layer of memory as on a screen 41.
The user rotates the control knob 400 to select "Yes" or "No". The user presses down the control knob 400, a selection is confirmed, and the screen is returned to the screen of the higher-order layer.
Also in this case, even though the user's finger presses a shifted position to make an up press or a right press, the press is similarly processed as a depression operation, and a selection is confirmed as the user intends to do so.

According to the first embodiment as described above, the following effect is exerted.
(1) Tilt operation is processed the same as a depression operation, so that tilt operation is processed as a depression operation as the user intends to do so, even though the user intends to make a press down but makes a right press or a up press. Therefore, operation errors caused by a shift of a pressed position are reduced, and the operability is improved.
(2) In the present embodiment, keys are allocated to rotation operation as much as possible for processes that can be performed by rotation operation, and keys are allocated to tilt operation in such a way that tilt operation is processed the same as a depression operation as much as possible. Accordingly, it is possible to reduce operation errors made by the user as little as possible, and it is possible to further improve the operability.

### First Exemplary Modification

In the aforementioned embodiment, the case is exemplified where the vehicle onboard device includes a rotatable control knob. However, the present invention can also be applicable to the case of a control knob that is not rotatable.
For example, a knob for rotation operation may be separately provided on the operation panel in addition to the operation key that can be tilted and pressed down.

Alternatively, as described in FIG. 5, operation buttons such as the up button 112 and the down button 113 may be provided, in addition to the operation key 111 that can be tilted and pressed down.
In this case, "rotation operation" in the first embodiment may be appropriately replaced with "operation made by the up button 112 and the down button 113".

It is noted that the present invention is not limited to the aforementioned embodiment and the exemplary modification, and can be appropriately modified within the scope not deviating from the teachings of the present invention.
In the aforementioned embodiment, the vehicle onboard device is exemplified. However, the present invention is not limited to the vehicle onboard device. It is without saying that the present invention is applicable to various input operation apparatuses.
Key allocations to the operation of the operating unit are appropriately designed depending on actual necessities. For example, in the aforementioned embodiment, depression of the operating unit is set to an enter key. However, it is without saying that keys are allocated according to other necessities.

In the description above, the case is exemplified where the present invention is applied in the screen status in which functions depending on the vehicle onboard device itself are selected by the user. However, in addition to this, keys are allocated in such a way that the key allocations of a source are changed.
This is because it is likely to increase operation errors in the case where the control knob of the input operation apparatus (the vehicle onboard device) is small, so that the key allocations of a source may be changed on purpose in some cases.

For an input operation control program that executes key allocations, such a configuration may be possible in which the input operation control program is installed on the input operation apparatus (the vehicle onboard device) through a communication unit such as the Internet or a recording medium such as a CD-ROM and a memory card and a CPU (the control unit) is operated by the installed program.
In installing the input operation control program, a memory card, a CD-ROM, or the like may be directly inserted into the input operation apparatus (the vehicle onboard device), or a device that reads these storage media may be externally connected. Moreover, the program may be supplied via communications by connecting a LAN cable, a telephone line, or the like, or the program is supplied in a wireless manner.

### Reference Signs List

- 100: Vehicle onboard device
- 110: Operation panel
- 111: Operation key
- 112: Up button
- 113: Down button
- 114: Display unit
- 120: Detecting unit
- 121: Rotation detecting unit
- 122: Tilt detecting unit
- 123: Depression detecting unit
- 130: Input interface
- 141: Radio tuner
- 142: CD driver
- 143: Bluetooth (registered trademark) device
- 150: Control unit
- 160: Output interface
- 170: Speaker
- 200: Cursor
- 400: Control knob
- 502: Cellular telephone

## Claims

1. An input operation apparatus comprising:
an operating unit capable of performing a tilt operation and a depression operation;
a detecting unit that detects a tilt direction and depression of the operating unit; and
a control unit that manages a plurality of modes, each mode including a plurality of select items, and controls input change or input confirmation according to an input operation made by the operating unit, wherein
the control unit processes an operation of the operation unit in a tilt direction equivalently with the depression operation in a predetermined mode.

2. The input operation apparatus according to claim 1, wherein
the operating unit is further capable of performing a rotation operation,
the detecting unit further detects rotation of the operating unit, and
when the rotation operation of the operating unit is allocated to change of the select item in a predetermined mode, the control unit processes an operation of the operating unit in a tilt direction equivalently with the depression operation.

3. The input operation apparatus according to claim 1, wherein
the operating unit is further capable of performing a rotation operation,
the detecting unit further detects rotation of the operating unit, and
when the rotation operation of the operating unit is allocated to raising and lowering of a set level in a predetermined mode, the control unit processes an operation of the operating unit in a tilt direction equivalently with the depression operation.

4. The input operation apparatus according to claim 2, wherein the control unit allocates the rotation operation of the operating unit to an input operation that is performed by the rotation operation or by the tilt operation, and processes the operation of the operating unit in the tilt direction equivalently with the depression operation.

5. The input operation apparatus according to claim 4, wherein the input operation that is performed by the rotation operation or by the tilt operation is at least any one of changing a select item and raising and lowering a set level.

6. An input operation control method for controlling an input operation using an input operation apparatus including an operating unit capable of operating a tilt operation and a depression operation, the method comprising:
processing an operation of the operating unit in a tilt direction equivalently with a depression operation in a predetermined mode.

7. The input operation control method according to claim 6, wherein
the operating unit is further capable of performing a rotation operation, and
the rotation operation of the operating unit is processed as changing a select item, and an operation of the operating unit in a tilt direction is processed equivalently with the depression operation in a predetermined mode.

8. The input operation control method according to claim 6, wherein
the operating unit is further capable of performing a rotation operation, and
the rotation operation of the operating unit is processed as raising and lowering a set level, and an operation of the operating unit in a tilt direction is processed equivalently with the depression operation in a predetermined mode.

9. An input operation control program that causes a computer, which is incorporated in an input operation apparatus including an operating unit capable of performing a tilt operation and a depression operation and a detecting unit that detects a tilt direction and depression of the operating unit, to function as a control unit configured to:
manage a plurality of modes, each mode including a plurality of select items;
control input change or input confirmation according to an input operation made by the operating unit; and
process an operation of the operating unit in the tilt direction equivalently with the depression operation in a predetermined mode.

10. A designing method for an input operation apparatus, the apparatus including:
an operating unit capable of performing a tilt operation, a depression operation, and a rotation operation;
a detecting unit that detects a tilt direction, depression and rotation of the operating unit; and
a control unit that manages a plurality of modes, each mode including a plurality of select items, and controls input change or input conformation according to an input operation made by the operating unit, the method comprising:
allocating a rotation operation of the operating unit to the input operation that is performed by the rotation operation or by the tilt operation; and
designing for allocation of the operations so as to process an operation of the operating unit in the tilt direction equivalently with the depression operation.
